# EUROPÄISCHE PATENTSCHRIFT

(11) **EP 0 909 716 B1**
(45) Veröffentlichungstag und Bekanntmachung des Hinweises auf die Patenterteilung: **23.07.2003**
(21) Anmeldenummer: 98890306.8
(22) Anmeldetag: 16.10.1998
(51) Int. Cl.: B65D 45/32, F16G 11/14

(54) **Spannvorrichtung für zwei Zuggliedtrume**
Tensioning means for clamping belt
Dispositif de tension pour ceinture de blocage

(30) Priorität: 17.10.1997 AT 176197; 19.08.1998 AT 140998
(43) Veröffentlichungstag der Anmeldung: 21.04.1999
(73) Patentinhaber: Buchwinkler, Andreas, 5152 Nussdorf (AT)
(72) Erfinder: Buchwinkler, Andreas, 5152 Nussdorf (AT)
(74) Vertreter: Hübscher, Gerhard, Dipl.-Ing.

(56) Entgegenhaltungen:
- DE-C- 556 698
- DE-C- 888 512
- DE-U- 9 415 174
- GB-A- 312 009
- US-A- 1 400 918

## Beschreibung

Die Erfindung bezieht sich auf eine Spannvorrichtung für zwei Zuggliedtrume mit einem die biegeweichen Zuggliedenden zugfest verbindenden Verschlußstück, das als von Hand drehbarer Spannknebel für die mit Abstand voneinander am Verschlußstück angreifenden Zuggliedenden ausgebildet ist.

Zur Befestigung eines Deckels auf einem Behälter ist es bekannt (GB 2 282 590 A), den Deckelrand mit einem Spannring aus Draht zu umschließen, dessen biegeweichen Enden zugfest in einem Verschlußstück gehalten werden. Dieses Verschlußstück bildet einen Spannhebel, der einen gegen den Deckelrand vorragenden Ansatz aufweist, über den sich das Verschlußstück am Deckelrand abstützt, so daß das Verschlußstück zum Spannen des Spannringes gegen den Behälter verschwenkt werden kann, und zwar mit dem sich am Deckel abwälzenden Ansatz als Schwenkachse. Wegen dieses Abwälzvorganges, der für das Spannen des Spannringes zwingend notwendig ist, bleibt jedoch der Einsatz dieser bekannten Spanneinrichtung beschränkt. Außerdem hängt der mögliche Spannweg von der Höhe des Ansatzes ab, wobei die aufzubringende Spannkraft mit der Höhe des Ansatzes ansteigt.

Darüber hinaus ist es bekannt (US 1 400 918 A), die Verschlußkappe einer Flasche mit Hilfe eines Spannringes zu befestigen, an dessen einem Ringende eine Exzenterscheibe drehbar gelagert ist, die einen exzentrischen Führungsschlitz für das andere Ringende bildet. Durch ein Verdrehen der Exzenterscheibe kann daher der Abstand der beiden Ringenden voneinander verändert werden. Nachteilig bei dieser Konstruktion ist vor allem, daß nicht nur der mit der Exzenterscheibe verbundene Aufwand verhältnismäßig groß ist, sondern daß auch der zum Spannen einzusetzende Kraftaufwand durch die Reibung des im exzentrischen Schlitz geführten Ringendes erheblich vermehrt wird, zumal ja die Reibungsverhältnisse so gewählt werden müssen, daß in der Spannstellung eine Selbsthemmung eintritt.

Schließlich ist es zum Befestigen eines Deckels eines Konservenglases bekannt (DE 888 512 C), um den das Konservenglas übergreifenden Rand des Deckels eine Drahtschlinge zu legen, deren Enden durch einen Spannknebel verbunden sind. Mit Hilfe dieses Spannknebels können die Schlingenenden unter einem Zusammenziehen der Drahtschlinge um den Deckelrand zusammengedreht werden. Aufgrund der plastischen Verformung der Schlingenenden bleibt deren Eindrehung und damit die auf die Drahtschlinge aufgebrachte Spannung erhalten, allerdings mit dem Nachteil, daß wegen der plastischen Verformung der Schlingenenden und der damit verbundenen Drahtbeanspruchung einem wiederholten Einsatz solcher Spannvorrichtungen Grenzen gesetzt sind.

Der Erfindung liegt somit die Aufgabe zugrunde, eine Spannvorrichtung der eingangs geschilderten Art so auszugestalten, daß einerseits einfache Konstruktionsbedingungen sichergestellt und anderseits vielfältige, wiederholbare Anwendungen bei einfachster Handhabung gewährleistet werden können.

Die Erfindung löst die gestellte Aufgabe dadurch, daß dem Verschlußstück in seiner Spanndrehstellung mit wenigstens einfach überkreuzten Zuggliedenden eine zumindest an einem der Zuggliedtrume befestigte Halterung zur Aufnahme des wirksamen Rückdrehmomentes zugeordnet ist.

Durch das Verdrehen des Verschlußstückes werden die beiden mit gegenseitigem Abstand am Verschlußstück angreifenden, biegeweichen Zuggliedenden überkreuzt, wobei der Stellweg für die Spannung der beiden Zuggliedtrume von der Anzahl der Umdrehungen des Verschlußstückes und damit von der Anzahl der Überkreuzungen abhängt. Da das auf die eingedrehten Zuggliedenden einwirkende Rückdrehmoment durch eine Halterung aufgenommen wird, brauchen die mit dem Rückdrehmoment verbundenen Kräfte nicht über den Formänderungswiderstand der Zuggliedenden aufgenommen zu werden, was eine vorteilhafte Voraussetzung für eine vielfach wiederholbare Betätigung der Spannvorrichtung darstellt. Mit der Anordnung der Halterung an wenigstens einem der Zuggliedtrume wird nicht nur eine Handhabungs- und Baueinheit, sondern auch eine Lageunabhängigkeit der Spannvorrichtung gegenüber dem die Spannvorrichtung aufnehmenden Gegenstand erreicht, weil sowohl das Verschlußstück als auch die Halterung der durch die Spannvorrichtung gegebenen Baueinheit angehören. Die erfindungsgemäße Spannvorrichtung kann daher vielfältig eingesetzt werden. So ist es möglich, die beiden Zuggliedtrume unmittelbar oder über einen Konstruktionsteil zu einem Spannring zu verbinden, um über diesen Spannring radiale Druckkräfte aufzubringen, wie dies beim Umspannen von Behälterdekkeln, beim Anbringen von Rohrschellen, beim Sichern von Verpackungen u. dgl. der Fall ist. In analoger Weise können aber auch Zugglieder zwischen Abspannstellen gespannt werden.

Die Halterung für das Verschlußstück kann unterschiedlich ausfallen, weil es nur darum geht, ein Rückdrehen des Verschlußstückes zufolge der aufgebrachten Spannkräfte zu verhindern. Zu diesem Zweck kann die Halterung aus einer schnappverschlußartigen Aufnahme für das Verschlußstück bestehen, was eine entsprechend drehfeste Abstützung der Aufnahme erfordert. Diese Forderung wird erfüllt, wenn die schnappverschlußartige Aufnahme aus einer von den Zuggliedenden durchsetzten Anschlagplatte besteht, in der Durchtrittsschlitze für federnde Zungen des Verschlußstückes vorgesehen sind. Eine andere Möglichkeit ergibt sich dadurch, daß die schnappverschlußartige Aufnahme aus einer von den Zuggliedenden durchsetzten Anschlagplatte gebildet wird, die Fanghaken trägt, wobei die Fanghaken das gegen die Anschlagplatte gedrückte Verschlußstück schnappverschlußartig übergreifen.

Um den durch die Halterung erforderlichen Konstruktionsaufwand klein zu halten, kann die Halterung aus einer die überkreuzten Zuggliedenden zwischen Seitenwänden aufnehmenden Tasche des Verschlußstückes bestehen. Da sich die überkreuzten Zuggliedenden an die Seitenwände der durch das Verschlußstück gebildeten Tasche anlegen, bilden die vom Überkreuzungsbereich ausgehenden Zuggliedtrume selbst einen Drehanschlag für das Verschlußstück. Das Spannen bzw. Nachspannen einer solchen Vorrichtung wird durch die Tasche des Verschlußstückes nicht behindert, weil beim Verdrehen des Verschlußstückes von Hand aus die von der Stelle der gegenseitigen Eindrehung ausgehenden Zuggliedtrume entlang der Taschenränder in die jeweils um 180° gegeneinander winkelversetzten Raststellungen bewegt werden können.

Wird die Spannvorrichtung für die Befestigung eines Deckels auf einem Behälter, insbesondere auf einer Getränkedose, eingesetzt und sind die Zuggliedtrume Teil des Deckels, so können besonders vorteilhafte Konstruktionsverhältnisse dadurch geschaffen werden, daß die Halterung für das Verschlußstück eine Abhebelasche für den Deckel bildet. In diesem Fall kann die ohnehin vorzusehende Abhebelasche vorteilhaft als Halterung für das Verschlußstück ausgebildet werden, beispielsweise dadurch, daß die Abhebelasche eine schnappverschlußartige Aufnahme für das Verschlußstück bildet.

In der Zeichnung ist der Erfindungsgegenstand beispielsweise dargestellt. Es zeigen
Fig. 1 eine erfindungsgemäße Spannvorrichtung zur Befestigung eines Behälterdeckels in einer zum Teil aufgerissenen Seitenansicht des Behälters,
Fig. 2 die Spannvorrichtung nach der Fig. 1 im Bereich des Verschlußstückes in einem größeren Maßstab,
Fig. 3 einen Schnitt nach der Linie III-III der Fig. 2,
Fig. 4 eine Konstruktionsvariante einer erfindungsgemäßen Spannvorrichtung in einem schematischen Schaubild,
Fig.5 eine erfindungsgemäβe Spannvorrichtung zum ßefestigen eines kon-struktionsteils an einem Träger in einem vereinfachten Querschnitt,
Fig. 6 eine weitere Ausbildungsform einer erfindungsgemäßen Spannvorrichtung in einem schematischen Schnitt durch das Verschlußstück,
Fig. 7 die Vorrichtung nach der Fig. 6 in einem Schnitt nach der Linie VII-VII der Fig. 6 und
Fig. 8 eine weitere Ausführungsform einer erfindungsgemäßen Spannvorrichtung in einer Darstellung entsprechend der Fig. 6.

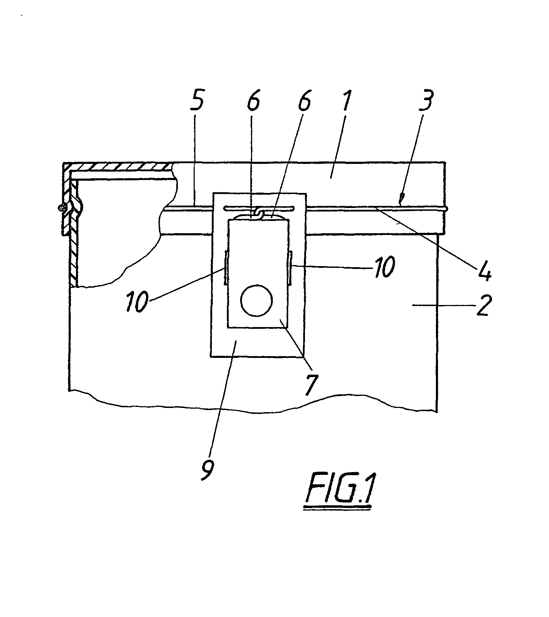

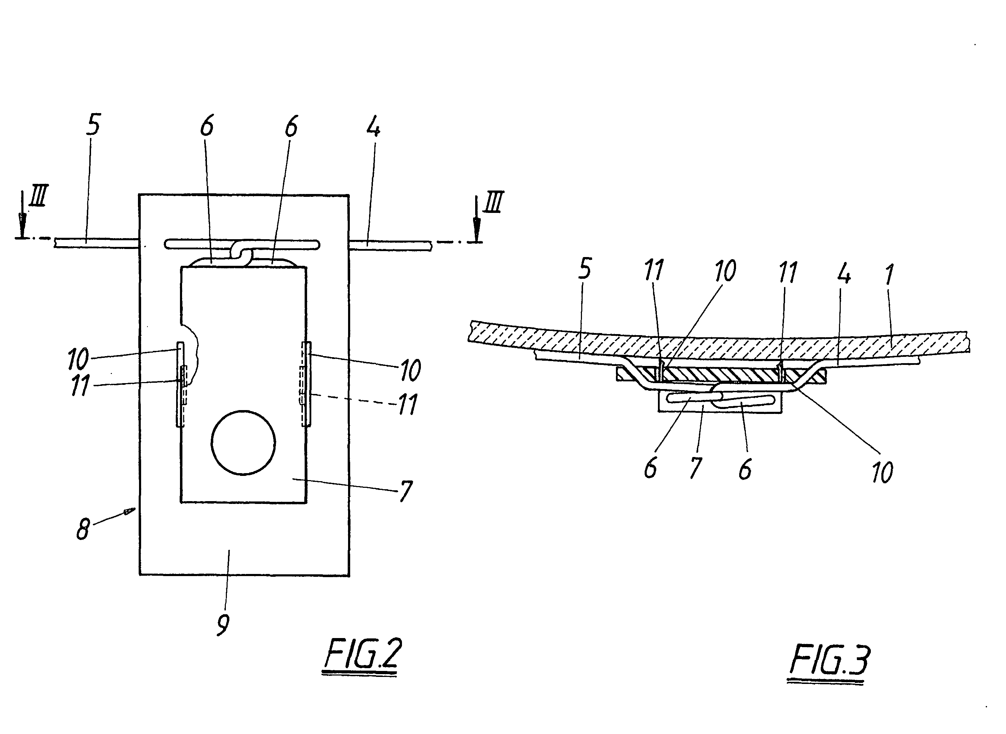

Die in den Fig. 1 bis 3 dargestellte Spannvorrichtung dient zur Befestigung eines Deckels 1 auf einem Behälter 2 und besteht im wesentlichen aus einem zu einem Spannring 3 geschlossenen Zugglied, dessen Trume 4 und 5 biegeweiche Enden 6 aufweisen, die an einem Verschlußstück 7 zugfest angreifen. Da die biegeweichen Zuggliedenden 6 mit gegenseitigem Abstand am Verschlußstück 7 befestigt sind, überkreuzen sich die Zuggliedenden unter einer gegenseitigen Verdrehung, wenn das Verschlußstück 7 nach Art eines Spannknebels gedreht wird, wie dies in der Zeichnung dargestellt ist. Mit jeder Umdrehung des Verschlußstückes 7 wird daher der Spannweg vergrößert, wobei aufgrund der gegebenen Übersetzungsverhältnisse hohe Spannkräfte in einfacher Weise von Hand aus aufgebracht werden können. Nach dem Spannen ist jedoch ein Rückdrehen des Verschlußstückes 7 zu verhindern. Zu diesem Zweck ist eine Halterung 8 vorgesehen, die aus einer Anschlagplatte 9 gebildet wird, in der Durchtrittsschlitze 10 für fedemde Zungen 11 vorgesehen sind, die vom Verschlußstück 7 gegen die Anschlagplatte 9 vorragen und verdickte Enden aufweisen, um ein ungewolltes Abheben des Verschlußstückes 7 von der Anschlagplatte 9 zu verhindern. Da die Anschlagplatte 9 an den beiden Zuggliedtrumen 4 und 5 befestigt ist - die Zuggliedtrume 4 und 5 sind durch entsprechende Durchtrittsöffnungen in der Anschlagplatte 9 geführt -, wird die Halterung 8 gegenüber den Trumen 4 und 5 gegen eine Drehung um eine quer zu den Zuggliedtrumen 4 und 5 verlaufende Achse abgestützt, so daß über die in dieser Weise drehfest abgestützte Halterung 8 die Spanndrehstellung des Verschlußstückes 7 gesichert werden kann. Die in einer zur Ebene des Spannringes 3 angenähert parallelen Ebene verlaufende Anschlagplatte 9 der Halterung 8 eignet sich insbesondere als Abhebelasche für einen Deckel 1 eines Behälters 2. In diesem Fall wird die Anschlagplatte 9 mit dem Deckel einstückig ausgebildet sein.

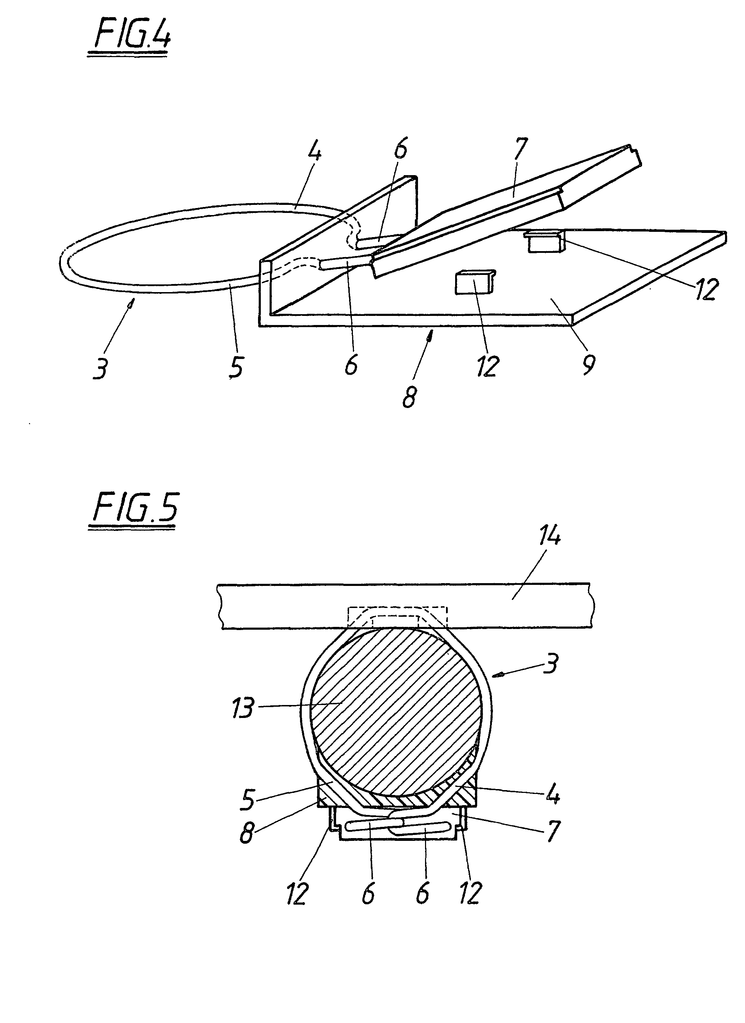

Die Fig. 4 zeigt eine Halterung 8, die ähnlich der Halterung nach den Fig. 1 bis 3 wirkt. Es ist wiederum eine Anschlagplatte 9 für das Verschlußstück 7 vorgesehen, doch bildet die Anschlagplatte 9 keine Schlitze, sondern Fanghaken 12, die das gegen die Anschlagplatte 9 gedrückte Verschlußstück 7 schnappverschlußartig übergreifen. In der Fig. 4 ist das Verschlußstück Leerzeichen 7 in der völlig entspannten Drehstellung gezeichnet, in der die biegeweichen Enden 6 einander noch nicht überkreuzen.

Die Spannvorrichtung nach der Fig. 5 dient dazu, einen Konstruktionsteil 13 an einem Träger 14 zu befestigen, und zwar nach Art einer Klemmschelle. Zu diesem Zweck bildet die Halterung 8 ein an den zylindrischen Konstruktionsteil 13 angepaßtes Formstück, gegen das das Verschlußstück 7 in der Spanndrehstellung abgeschwenkt werden kann, um von den aufragenden Fanghaken 12 schnappverschlußartig umschlossen zu werden.

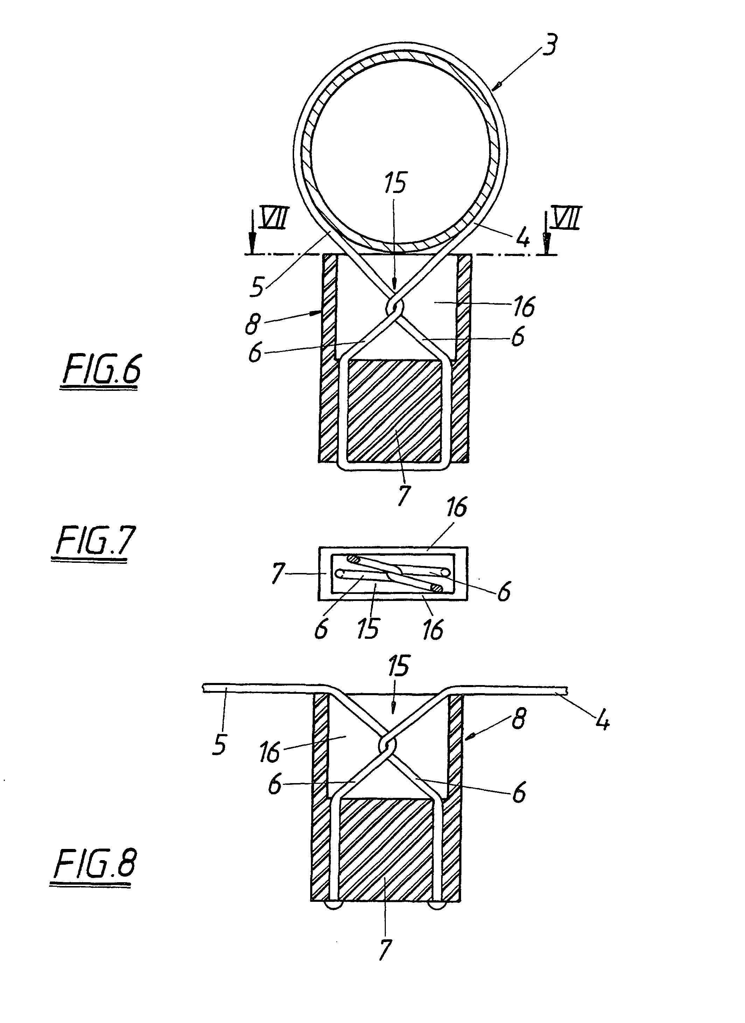

In den Fig. 6 und 7 ist ein Verschlußstück 7 dargestellt, das die Halterung 8 selbst bildet. Die Zuggliedenden 6 werden zu diesem Zweck durch eine Tasche 15 geführt, die zwischen einander gegenüberliegenden, über den eigentlichen Verschlußkörper 7 hinaus verlängerten Seitenwänden 16 gebildet wird. Da die Zuggliedtrume 4 und 5 zwischen die Seitenwände 16 eingreifen, können sich die Seitenwände 16 der Tasche 15 an diesen gespannten Trumen 4 und 5 abstützen, was eine entsprechende Verdrehsicherung des Verschlußstückes in einer Spanndrehstellung mit sich bringt. Beim Spannen der Spannvorrichtung ist allerdings in Kauf zu nehmen, daß die in die Tasche 15 eingreifenden Zuggliedtrume 4 und 5 entlang der Seitenwandränder gegeneinander verschoben werden müssen, wenn das Verschlußstück 7 im Spannsinn verdreht wird, was einen etwas höheren Kraftaufwand für das Spannen des Spannringes 3 mit sich bringt.

Die Fig. 8 zeigt ein Verschlußstück 7, das im wesentlichen dem in den Fig. 6 und 7 dargestellten Verschlußstück entspricht. Der wesentliche Unterschied liegt vor allem darin, daß dieses Verschlußstück 7 nicht zum Spannen eines Spannringes eingesetzt wird, sondern von zwei Zuggliedtrumen 4 und 5, die nicht miteinander zu einem Ring verbunden sind. Die grundsätzliche Funktion dieser Spannvorrichtung bleibt jedoch erhalten.

## Patentansprüche

1. Spannvorrichtung für zwei Zuggliedtrume (4, 5) mit einem die biegeweichen Zuggliedenden (6) zugfest verbindenden Verschlußstück (7), das als von Hand drehbarer Spannknebel für die mit Abstand voneinander am Verschlußstück (7) angreifenden Zuggliedenden (6) ausgebildet ist, **dadurch gekennzeichnet, daß** dem Verschlußstück (7) in seiner Spanndrehstellung mit wenigstens einfach überkreuzten Zuggliedenden (6) eine zumindest an einem der Zuggliedtrume (4, 5) befestigte Halterung (8) zur Aufnahme des wirksamen Rückdrehmoments zugeordnet ist.

2. Spannvorrichtung nach Anspruch 1, **dadurch gekennzeichnet, daß** die Halterung (8) aus einer schnappverschlußartigen Aufnahme für das Verschlußstück (7) besteht.

3. Spannvorrichtung nach Anspruch 2, **dadurch gekennzeichnet, daß** die schnappverschlußartige Aufnahme aus einer von den Zuggliedenden (6) durchsetzten Anschlagplatte (9) besteht, in der Durchtrittsschlitze (10) für federnde Zungen (11) des Verschlußstückes (7) vorgesehen sind.

4. Spannvorrichtung nach Anspruch 2, **dadurch gekennzeichnet, daß** die schnappverschlußartige Aufnahme aus einer von den Zuggliedenden (6) durchsetzten Anschlagplatte (9) besteht und daß die Anschlagplatte (9) Fanghaken (12) trägt, die das gegen die Anschlagplatte (9) gedrückte Verschlußstück (7) schnappverschlußartig übergreifen.

5. Spannvorrichtung nach Anspruch 1, **dadurch gekennzeichnet, daß** die Halterung (8) aus einer die überkreuzten Zuggliedenden (6) zwischen Seitenwänden (16) aufnehmenden Tasche (15) des Verschlußstückes (7) besteht.

6. Spannvorrichtung nach einem der Ansprüche 1 bis 5, **dadurch gekennzeichnet, daß** die Zuggliedtrume (4, 5) Teil eines Deckels (1) für einen Behälter (2), insbesondere für eine Getränkedose, sind und daß die Halterung (8) für das Verschlußstück (7) eine Abhebelasche (10) für den Deckel (1) bildet.

## Claims

1. A clamping device for two tension member runs (4, 5) comprising a fastener (7) which connects the movable tension member ends (6) so that they are tension-resistant and which is constructed in the form of a manually rotatable clamping toggle for the spaced-apart tension member ends (6) engaging the fastener (7), **characterised in that** there is associated with the fastener (7) in its rotary clamping position with the tension member ends (6) crossing one another at least singly, a mounting (8) which is fixed at least on one of the tension member runs (4, 5) to receive the active reverse torque.

2. A clamping device according to claim 1, **characterised in that** the mounting (8) consists of a holder in the form of a snap closure for the fastener (7).

3. A clamping device according to claim 2, **characterised in that** the holder in the form of a snap closure consists of an abutment plate (9) through which the tension member ends (6) extend and in which passage slots (10) are provided for resilient tongues (11) of the fastener (7).

4. A clamping device according to claim 2, **characterised in that** the holder in the form of a snap closure consists of an abutment plate (9) through which the tension member ends (6) extend and **in that** the abutment plate (9) bears catch hooks (12) which engage in the form of a snap closure over the fastener (7) pressed against the abutment plate (9) .

5. A clamping device according to claim 1, **characterised in that** the mounting (8) consists of a pocket (15) of the fastener (7), said pocket receiving the crossed-over tension member ends (6) between side walls (16).

6. A clamping device according to any one of claims 1 to 5, **characterised in that** the tension member runs (4, 5) are part of a lid (1) for a container (2), more particularly a beverage can, and **in that** the mounting (8) for the fastener (7) forms a lift-off link (10) for the lid.

## Revendications

1. Dispositif de tension pour deux brins d'organes de traction (4, 5), avec une pièce de fermeture (7) reliant de façon ferme en traction les extrémités d'organes de traction (6) souples en flexion, pièce de fermeture réalisée sous la forme de manettes de serrage, susceptibles d'être tournées à la main, pour les extrémités d'organes de traction (6) agissant à distance l'un de l'autre sur la pièce de fermeture (7), **caractérisé en ce qu'**à la pièce de fermeture (7) est associée, à sa position de rotation de serrage avec au moins des extrémités d'organes de traction (6) effectuant un croisement simple, une fixation (8), fixée au moins sur l'un des brins d'organes de traction (4, 5), pour supporter le couple de rotation de rappel actif.

2. Dispositif de tension selon la revendication 1, **caractérisé en ce que** la fixation (8) est formée d'un logement, du genre d'une fermeture à encliquetage, pour la pièce de fermeture (7).

3. Dispositif de tension selon la revendication 2, **caractérisé en ce que** le logement du genre d'une fermeture à encliquetage est formé d'une plaque de butée (9), traversée par les extrémités d'organes de traction (6), plaque dans laquelle sont prévues des fentes de passage (10) pour des languettes (11) élastiques de la pièce de fermeture (7).

4. Dispositif de tension selon la revendication 2, **caractérisé en ce que** le logement, du genre d'une fermeture à encliquetage, est formé d'une plaque de butée (9) traversée par les extrémités d'organes de traction (6), et **en ce que** la plaque de butée (9) porte des crochets de capture (12) qui entourent à la façon d'une fermeture à encliquetage la pièce de fermeture (7) pressée contre la plaque de butée (9).

5. Dispositif de tension selon la revendication 1, **caractérisé en ce que** la fixation (8) est formée d'une poche (15), recevant entre des parois latérales (16) les extrémités d'organes de traction (6), se croisant, de la pièce de fermeture (7).

6. Dispositif de tension selon l'une des revendications 1 à 5, **caractérisé en ce que** les brins d'organes de traction (4, 5) font partie d'un couvercle (1) pour un récipient (2), en particulier une boite de boisson, et **en ce que** la fixation (8) pour la pièce de fermeture (7) forme une patte de soulèvement (10) pour le couvercle (1).
